# EUROPEAN PATENT SPECIFICATION

(11) **EP 4 597 831 B1**
(45) Date of publication and mention of the grant of the patent: **02.12.2026**
(21) Application number: 24154684.5
(22) Date of filing: 30.01.2024
(51) Int. Cl.: H02P 29/62, H02P 29/64

(54) **METHODS AND SYSTEMS FOR HEATING A COMPONENT**
VERFAHREN UND SYSTEME ZUM ERWÄRMEN EINER KOMPONENTE
PROCÉDÉS ET SYSTÈMES DE CHAUFFAGE D'UN COMPOSANT

(43) Date of publication of application: 06.08.2025
(73) Proprietor: Thermo King LLC, Minneapolis, MN 55420 (US)
(72) Inventor: Gorski, Matthias, 44866 Bochum (DE); Bock, Sebastian, 45239 Essen (DE)
(74) Representative: Haseltine Lake Kempner LLP

(56) References cited:
- US-A- 5 896 021
- US-A1- 2015 188 480
- US-A1- 2020 067 447

## Description

### FIELD OF THE INVENTION

The present disclosure relates to methods of heating a component, such as a metallic component. The present disclosure also relates to systems comprising means adapted to carry out such methods.

### BACKGROUND OF THE INVENTION

When switching between operating modes of a vapour-compression refrigeration circuit (e.g., when switching between a cooling mode and a heating mode of a vapour-compression refrigeration circuit), accumulations of liquid refrigerant with which the vapour-compression refrigeration circuit is charged can be distributed unfavourably within the vapour-compression refrigeration circuit. In particular, liquid refrigerant may reach and accumulate at a suction-side of a compressor of the vapour-compression refrigeration circuit. Certain types of compressors, such as scroll compressors, do not react robustly to liquid accumulations on the suction-side thereof. More generally, for various types of compressors, relatively large liquid accumulations on the suction-side of the compressor can cause damage to the compressor and/or poor performance of the compressor.

It is desirable to provide improved methods and systems for reducing and/or eliminating liquid accumulations on the suction-side of a compressor which forms part of a vapour-compression refrigeration circuit. The present invention has been devised with the foregoing in mind.

US 2015/188480 A1 describes an electric motor, a compressor including the electric motor and a method for controlling the electric motor or the compressor.

US 2020/067447 A1 describes techniques for implementing a variable speed drive in an environmental conditioning system to facilitate mitigating or eliminating system faults

US 5896021 A describes a method for removing moisture from an induction motor, the method including providing a current to preheat the induction motor. The provided current can be a substantially DC current or a substantially AC current.

### BRIEF SUMMARY OF THE INVENTION

According to a first aspect there is provided a method for (e.g., of) heating a component using a system comprising: a wound arrangement including at least one winding having an inductance, and at least two half-bridges, wherein each half-bridge is coupled to the wound arrangement, and wherein the wound arrangement is proximal to the component; the method comprising: performing a sequence of modulation cycles in which the half-bridges are controlled such that: a voltage is applied to the winding during at least four drive stages of each modulation cycle; and a voltage is not applied to the winding during at least five non-drive stages of each modulation cycle, wherein each non-drive stage is followed by or preceded by one of the drive stages in each modulation cycle.

It may be that at least two of the drive stages are chronologically separate from the other drive stages within each modulation cycle. It may be that at least three of the drive stages are temporally non-contiguous.

A magnitude of a current through the winding may be substantially zero at both a start and an end of each modulation cycle.

Each half bridge may be operable in a high complementary state and a low complementary state. It may be that: during each of the at least four drive stages of each modulation cycle, at least one half bridge is operated in the high complementary state and at least one half bridge is operated in the low complementary state; and during each of the at least five non-drive stages of each modulation cycle, the half bridges are all operated in the same complementary state.

It may be that a sign of the voltage applied to the winding during two of the drive stages opposes a sign of the voltage applied to the winding during at least two of the other drive stages.

The method may further comprise varying a ratio between a duration of at least one of the drive stages of the modulation cycle and a length of at least one of the non-drive stages of the modulation cycle between modulation cycles.

The method may further comprise: monitoring a parameter, the parameter including an impedance of the winding or a temperature of: the winding, the component or a medium proximal to the component; and varying the ratio based on the monitored parameter.

It may be that: the wound arrangement includes at least three windings each having an inductance; the system comprises a third half-bridge coupled to the wound arrangement; and performing the sequence of modulation cycles includes controlling the half-bridges such that: a voltage is applied to at least two of the windings during the at least four drive stages of each modulation cycle; and a voltage is not applied to any of the windings during the at least five non-drive stages of each modulation cycle.

It may be that performing the sequence of modulation cycles includes controlling the half-bridges such that: a voltage is applied to a first subset of the windings during a plurality of partial-drive stages of each modulation cycle; and a voltage is not applied to any of a second subset of the windings during the plurality of partial-drive stages of each modulation cycle.

According to a second aspect there is provided a system comprising: a wound arrangement including at least one winding having an inductance, at least two half bridges and a controller, wherein each half-bridge is coupled to the wound arrangement; and wherein the controller is configured to carry out a method in accordance with the first aspect.

It may be that the wound arrangement forms part of a stator of an electric motor, and wherein the component forms at least part of a rotor of the electric motor.

According to a third aspect there is provided a computer program comprising instructions to cause a system in accordance with the second aspect to carry out a method in accordance with the first aspect.

According to a fourth aspect there is provided a computer-readable medium having stored thereon a computer program in accordance with the third aspect.

According to a fifth aspect there is provided a transport refrigeration unit comprising a system in accordance with the second aspect.

### BRIEF DESCRIPTION OF THE DRAWINGS

**FIG. 1** shows a vehicle comprising a transport refrigeration system;
**FIG. 2** is a schematic diagram of example transport refrigeration unit suitable for use with the vehicle of FIG. 1, the example transport refrigeration unit comprising an electrical system and a vapour-compression refrigeration circuit;
**FIG. 3** is a diagram which shows an example power converter and an example electric motor suitable for use with the electrical system of FIG. 2;
**FIG. 4** is a flowchart which shows an example method of operating an electrical system in accordance with the present disclosure;
**FIG. 5** is a detail flowchart showing an example action of performing a modulation cycle which forms a part of the example method of FIG. 4;
**FIG. 6** is a graph showing an idealised plot of current through a plurality of windings with respect to time during performance of a first example implementation of a modulation cycle for use during the example method of FIG. 4 per a duty ratio;
**FIG. 7** is a graph showing an idealised plot of current through a plurality of windings with respect to time during performance of the first example implementation of a modulation cycle per a duty ratio which differs from the duty ratio of FIG. 6;
**FIG. 8** is a graph showing an idealised plot of current through a plurality of windings with respect to time during performance of a second example implementation of a modulation cycle for use during the example method of FIG. 4 per a duty ratio;
**FIG. 9** is a graph showing an idealised plot of current through a plurality of windings with respect to time during the second example implementation of a modulation cycle per a duty ratio which differs from the duty ratio of FIG. 8;
**FIG. 10** is a graph showing an idealised plot of current through a plurality of windings with respect to time during performance of a third example implementation of a modulation cycle for use during the example method of FIG. 4 per a duty ratio;
**FIG. 11** is a graph showing an idealised plot of current through a plurality of windings with respect to time during the third example implementation of a modulation cycle per a duty ratio which differs from the duty ratio of FIG. 10; and
**FIG. 12** is a highly schematic diagram of a machine-readable medium having stored thereon a computer program which, when executed by a controller, causes the controller to perform the example method of FIG. 4.

### DETAILED DESCRIPTION OF THE INVENTION

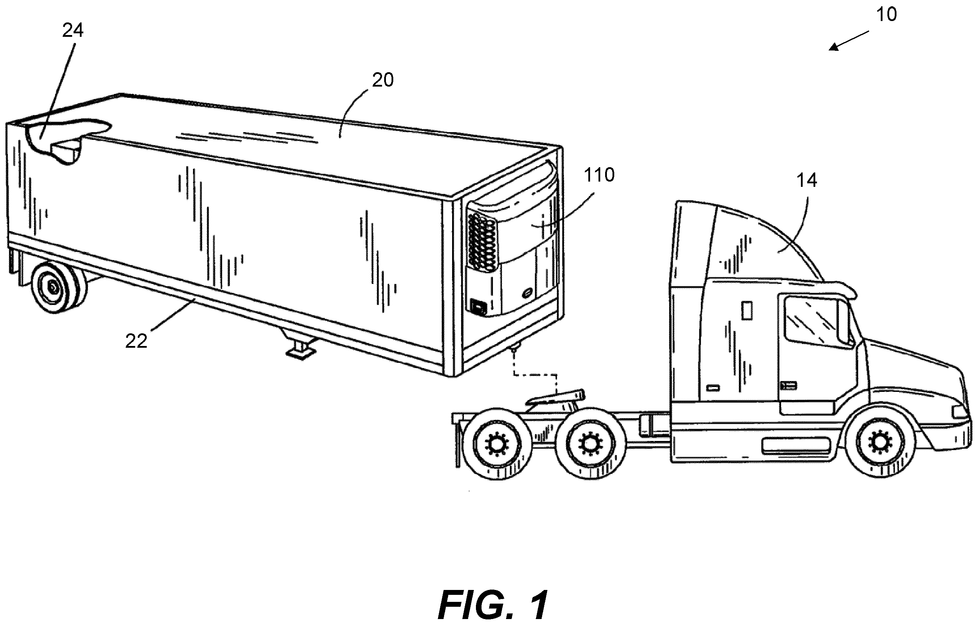

**FIG. 1** shows a vehicle 10 comprising a transport refrigeration system 20. In the example of FIG. 1, the transport refrigeration system 20 forms a part of an over-the-road refrigerated semi-trailer having a structure 22 supporting (or forming) at least one climate-controlled compartment 24 which is configured to be cooled and/or heated by a TRU 110. The climate-controlled compartment 24 can take the form of multiple compartments or have multiple zones. The structure 22 includes a chassis. The structure 22 supports the TRU 110. The vehicle 10 further comprises a tractor unit 14 removably couplable to the trailer.

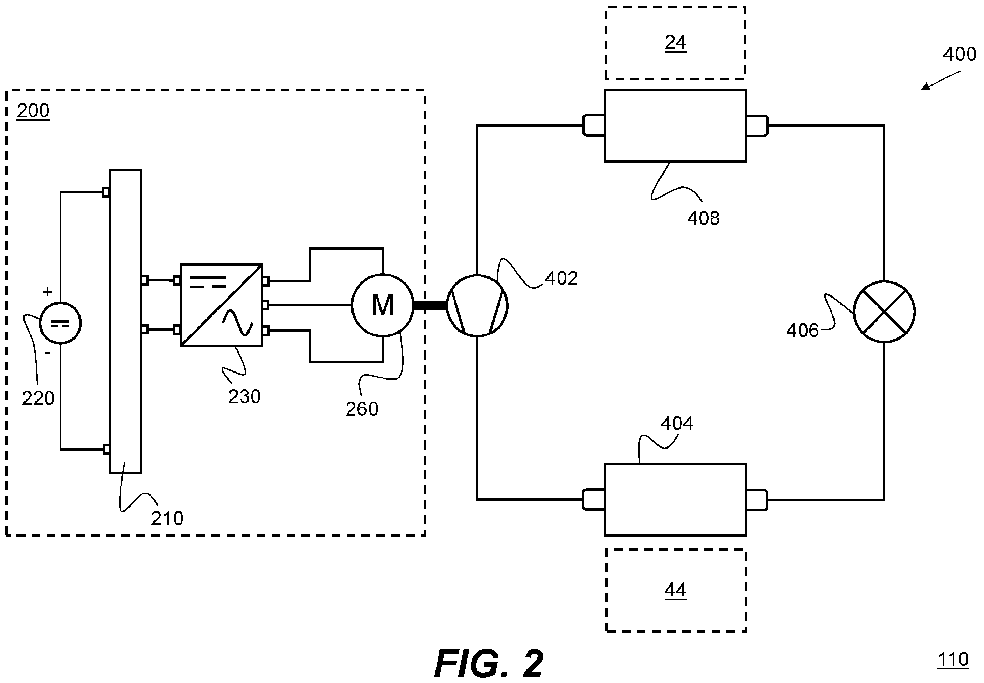

**FIG. 2** schematically shows a diagram of an example TRU 110 suitable for use within the vehicle 10 and the transport refrigeration system 20 of FIG. 1. The TRU 110 comprises a vapour-compression refrigeration circuit 400 and an electrical system 200.

The vapour-compression refrigeration circuit 400 includes an evaporator 408 which is configured to receive heat from the climate-controlled compartment 24 of the transport refrigeration system 20 and a condenser 404 which is configured to reject heat to a thermal sink 44 (e.g., ambient air outside of the climate-controlled compartment 24). For these purposes, the vapour-compression refrigeration circuit 400 also includes a compressor 402 and an expansion valve 406. Accordingly, the vapour-compression refrigeration circuit 400 may be controlled to cause heat to be removed from the climate-controlled compartment 24. The TRU 110 also comprises a plurality of fans 462, 464. In the example of FIG. 2, a first fan 462 is associated with (e.g., located in proximity to) the evaporator 408 for improving heat transfer at one or more surfaces of the evaporator 408, and a second fan 464 is associated with (e.g., located in proximity to) the condenser 404 for improving heat transfer at one or more surfaces of the condenser 404. The vapour-compression refrigeration circuit 400 is charged with, and circulates, a refrigerant therein for these purposes, as will be understood by those skilled in the art.

The electrical system 200 comprises a DC bus 210 configured to receive electrical power from a DC power supply 220, a power converter 230, and an electric motor 260. This disclosure envisages that the DC power supply 210 may not form part of the electrical system 200 as such, and that the DC bus 210 may instead be couplable to, and hence configured to receive electrical power from, the DC power supply 220.

The electric motor 260 is mechanically coupled to, and is therefore configured to mechanically drive, the compressor 402. Thus, the electrical system 200 may be operated to drive the compressor 402 and thereby control the vapour-compression refrigeration circuit 400. The compressor 402 may be any suitable type of compressor, as will be apparent to those skilled in the art. However, in particular examples, the compressor 402 may be a scroll compressor (e.g., a hermetic scroll compressor).

The power converter 230 is electrically coupled to, and is therefore configured to electrically drive, the electric motor 260. An input side of the power converter 230 is configured to receive an input DC voltage from the DC bus 210 (e.g., an input DC voltage having a magnitude which corresponds to an operating voltage of the DC bus 210), whereas an output side of the power converter 230 is configured to provide at least one output voltage to the electric motor 260 for electrical driving thereof.

The electric motor 260 is a multiple-phase AC electric motor and the power converter 230 is a multiple-phase DC-AC power converter 230 (e.g., a multiple-phase DC-AC converter 230 or a multiple-phase inverter 230). The electric motor 260 may be, for example, an induction motor (i.e., an asynchronous motor). Consequently, the electric motor 260 may include a plurality of phase windings (e.g., windings), as will be appreciated by those skilled in the art. In this example, the electric motor 260 is a three-phase AC electric motor.

The multiple-phase inverter 230 is generally configured to convert the input DC voltage supplied to the input side of the multiple-phase inverter 230 to at least one AC voltage (e.g., a plurality of output AC voltages) for supply to the electric motor 260 from the output side of the multiple-phase inverter 230. A frequency and a phase of each output AC voltage for supply to the electric motor 260 is controllable as will be appreciated by those skilled in the art.

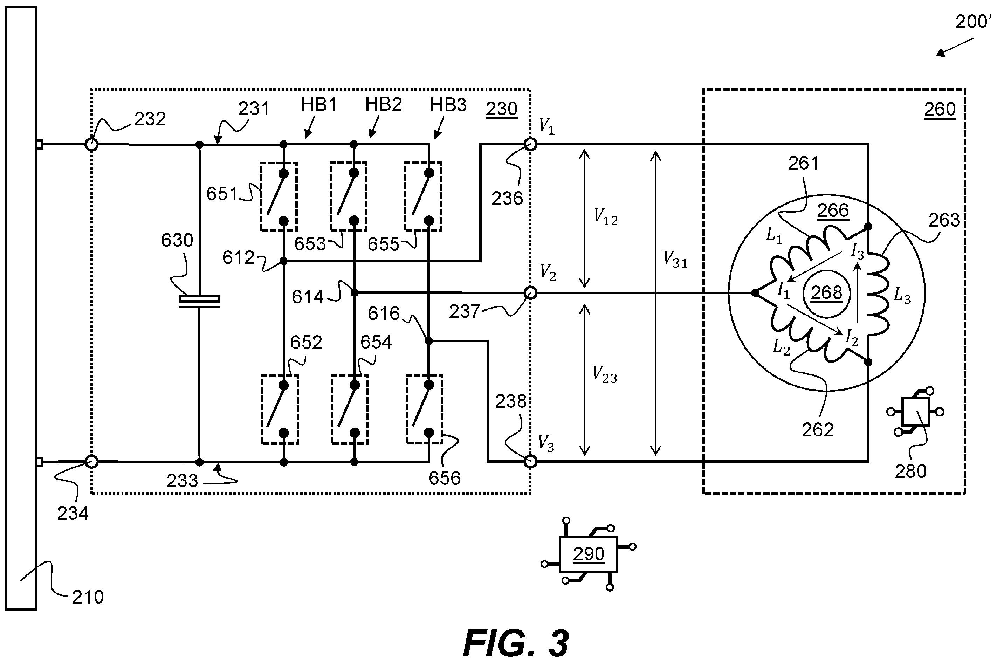

**FIG. 3** is a diagram showing an example power converter 230 and an example electric motor 260 suitable for use as the power converter 230 and the electric motor 260, respectively, in FIG. 2. The example power converter 230 and the example electrical motor 260 may together be referred to as an electrical system 200' or may form part of a broader electrical system 200 (e.g., the electrical system 200 described above with reference to FIG. 2).

The input side of the three-phase AC-DC converter 230 is configured to receive the input DC voltage from the DC power supply 220 via the DC bus 210 through input terminals 232, 234. The output side of the three-phase AC-DC converter 230 is configured to supply the output AC voltages to the third electric motor 260 through first, second and third output terminals 236, 237, 238. A first output voltage supplied through the first terminal 236 is denoted by *V*₁, a second output voltage supplied through the second terminal 237 is denoted by *V*₂, and a third output voltage supplied through the third terminal 238 is denoted by *V*₃. A voltage between the first and second terminals 236, 237 is denoted by *V*₁₂ and is given by *V*₁ - *V*₂. In a similar way, a voltage between the second and third terminals 237, 238 is denoted by *V*₂₃ and is given by *V*₂ *- V*₃. Further, a voltage between the third and first terminals 238, 236 is denoted by *V*₃₁ and is given by *V*₃ -*V*₁*.*

The electric motor 260 is shown by FIG. 3 as comprising first, second and third windings 261, 262, 263, each of which may include an inductive load and, optionally, any suitable combination of a resistive load and a capacitive load. Nevertheless, it will be understood that each winding 261, 262, 263 may considered to primarily comprise an inductive load. In the specific example of FIG. 3, the first, second and third windings 261, 262, 263 are arranged in a delta configuration to form a wound arrangement, but other configurations (e.g., a wye configuration) are also possible for the wound arrangement. Also, in the example of FIG. 3, the first winding 261 is configured to receive the voltage *V*₁₂ between the first and second terminals 236, 237, the second winding 262 is configured to receive the voltage *V*₂₁ between the second and third terminals 237, 238, and the third winding 263 is configured to receive the voltage *V*₃₁ between the third and first terminals 238, 236/

An inductance of the first winding 261 is denoted by *L*₁ and a current therethrough is given by *I*₁, an inductance of the second winding 262 is denoted by *L*₂ and a current therethrough is given by *I*₂, while an inductance of the third winding 262 is denoted by *L*₃ and a current therethrough is given by *I*₃. A rate of change of the current through the first winding 261 is denoted by *İ*₁, a rate of change of the current through the second winding 262 is denoted by *İ*₂, and a rate of change of the current through the third winding 263 is denoted by *İ*₃. Each winding 261, 262, 263 forms part of a stator 266 of the motor 260 and is proximal to a rotor 268 of the motor 260 per a typical motor (e.g., induction/asynchronous motor) arrangement, as will be recognisable to those skilled in the art. The rotor 268 is a metallic component (e.g., comprises a metal) and is both able to support a magnetic field (e.g.., is magnetically permeable) and is able to convey electrical currents (e.g., eddy currents) therein (e.g., is electrically conductive). Consequently, the rotor 268 may be referred to as a magnetically permeable element and/or an electrically conductive element. The stator 266 is also a metallic component.

The input side of the AC-DC converter 230 comprises a plurality of switches. The plurality of switches are arranged as first, second and third input half-bridges HB1, HB2, HB3. The first input half-bridge HB1 comprises a first high-side switch 651 and a first low-side switch 652, the second input half-bridge HB2 comprises a second high-side switch 653 and a second low-side switch 654, while the third input half-bridge HB3 comprises a third high-side switch 655 and a third low-side switch 656. Therefore, the input side of the AC-DC converter 230 comprises a plurality of high-side switches 651, 653, 655 and a plurality of low-side switches 652, 654, 656. As will be recognisable to those skilled in the art, the plurality of switches of the power converter 230 are mutually connected to each other in a typical H-bridge inverter circuit arrangement.

A first half-bridge output node 612 is coupled to and between a terminal of the first motor winding 261 and a terminal of the second motor winding 262, a second half bridge output node 614 is connected to and between a terminal of the second motor winding 262 and a terminal of the third motor winding 263, and a third half bridge output node 616 is connected to and between a terminal of the third motor winding 263 and a terminal of the first motor winding 261. The windings 261, 262, 263 may be more generally and simply referred to as loads 261, 262, 263. In this way, the half bridges HB1, HB2, HB3 are each coupled to the windings 261, 262, 263 (i.e., the wound arrangement).

A first input connection rail 231 extends between the first input terminal 232 and the first high-side switch 651 to provide an electrical connection between the first input terminal 232 and the plurality of high-side switches 651, 653, 655. Similarly, a second input connection rail 233 extends between the second input terminal 234 and the first low-side switch 652 to provide an electrical connection between the second input terminal 234 and the plurality of low-side switches 652, 654, 656. In use, the first input connection rail 231 is connected to a positive terminal of the DC power supply 220 via the DC bus 210 whereas the second input connection rail 233 is connected to a reference voltage (e.g. ground or negative) terminal of the DC power supply 220 via the DC bus 210. As a result, an electric potential of the first input connection rail 231 is higher than an electric potential of the second input connection rail 233 during use. Therefore, the first input connection rail 231 may be referred to as a positive input connection rail 231 and the second input connection rail 233 may be referred to as a negative input connection rail 233. The first input connection rail 231 and the second input connection rail 233 together form part of a DC link of the power converter 230.

Further, a DC link capacitor 630 is couplable between the input terminals 232, 234 in parallel with the half-bridges HB1, HB2, HB3. Accordingly, the capacitor 630 can be coupled so as to receive the voltage supplied by the DC bus 210. The capacitor 630 therefore acts to smooth the voltage received by the half-bridges HB1, HB2, HB3 by reducing temporal variations (i.e., ripple) in the voltage supplied by the DC bus 210. The capacitor 630 comprises a first terminal and a second terminal, each of which correspond to a respective side (e.g., a respective plate) of the capacitor 630. The first terminal of the capacitor 630 is electrically coupled to the first input connection rail 231 while the second terminal of the capacitor 630 is electrically coupled to the second input connection rail 233. The capacitor 630 also forms part of the DC link of the power converter 230.

The power converter 230 is functionally provided with (e.g., comprises) a respective controller 290 configured to control operation of the power converter. To this end, the controller 290 is communicatively coupled with each of the plurality of switches.

Each half-bridge HB1, HB2, HB3 is operable in at least a high-operating state (e.g., "HIGH") and a low-operating state (e.g., "LOW'). In the high-operating state of each half-bridge, the relevant high-side switch 651, 653, 655 is in a closed state (e.g., a conducting state or an activated state) and the corresponding low-side switch 652, 654, 656 is in an open state (e.g., a non-conducting state or a deactivated state). Conversely, in the low-operating state of each half-bridge, the relevant high-side switch 651, 653, 655 is in the open state and the corresponding low-side switch 652, 654, 656 is in the closed state. Thus the high-operating state and the low-operating state of each half-bridge HB1, HB2, HB3 may be described as complementary operating states. Each half-bridge HB1, HB2, HB3 is also operable in a non-operating state (e.g., "OFF") in which both the relevant high-side switch 651, 653, 655 and the corresponding low-side switch 652, 654, 656 are in the open state.

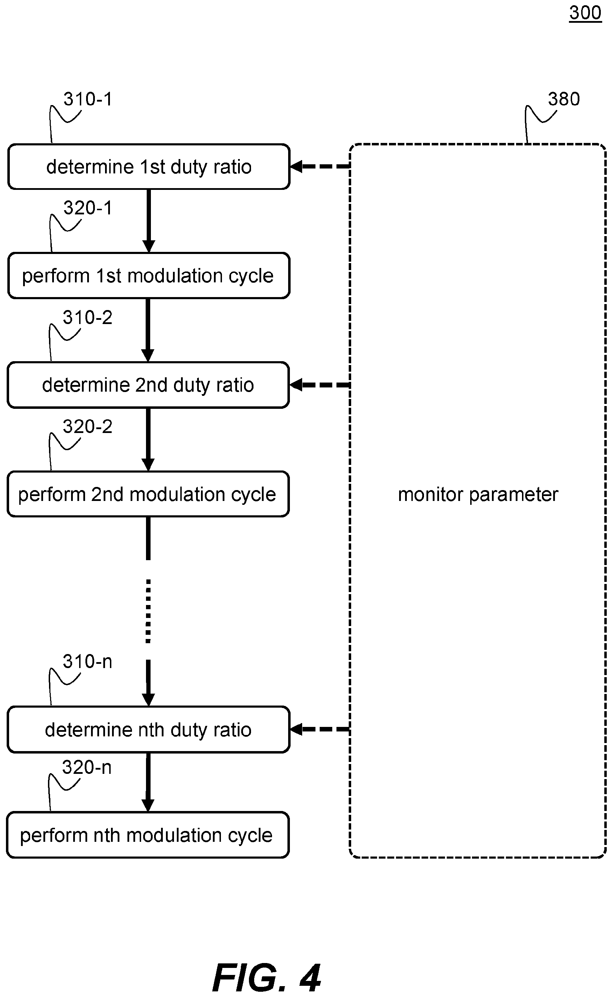

**FIG. 4** is a flowchart showing an example method 300 of heating a component (e.g., a metallic component) using an electrical system (e.g., the electrical system of FIG. 2 or FIG. 3) in accordance with the present disclosure. The component may be, in particular, the stator 266 or the rotor 268 of the motor 260 described above. The method(s) described herein may be carried out by a suitable data processing apparatus, such as the controller 290 described above with respect to FIG. 3. In other words, the controller 290 may be configured to carry out the method(s) described herein (e.g., the method 300).

The method 300 comprises an action of determining, at block 310-1, a duty ratio for a first modulation cycle and an action of performing, at block 320-1, the first modulation cycle according to the duty ratio determined at block 310-1. The method further comprises an action of determining, at block 310-2, a duty ratio for a second modulation cycle and an action of performing, at block 320-2, the second modulation cycle according to the duty ratio determined at block 310-2. Blocks 310-2 and 320-2 are performed following blocks 310-1 and 320-1, such that the method 300 comprises performing a sequence of modulation cycles, the sequence comprising at least the first modulation cycle (as represented by block 310-1) and the second modulation cycle (as represented by block 310-2). The sequence may further comprise additional modulation cycles. That is, the sequence may comprise at least two modulation cycles and any additional number of modulation cycles up to an nth modulation cycle. In order to represent this, FIG. 4 shows the method 300 as also comprising an action of determining, at block 310-n, a duty ratio for an nth modulation cycle and an action of performing, at block 320-n, the nth modulation cycle according to the duty ratio determined at block 310-n.

Each action of determining, at blocks 310-1, 310-2, 310-n, a duty ratio for the respective modulation cycle is generally similar and is described in further detail below. Likewise, each action of performing, at blocks 320-1, 320-2, 320-n, the respective modulation cycle according to the duty ratio determined at the corresponding block 310-1, 310-2, 310-n, is generally similar and is described in further detail below. The modulation cycles may be referenced herein using the reference signs associated with the representative blocks in FIG. 4 (e.g., 320-1, 320-2, 320-n).

Performance of each modulation cycle 320-1, 320-2, 320-n includes controlling the state of at least two half-bridges HB1, HB2, HB3 (by controlling the switches 651-656) such that a voltage is applied to one or more of the windings 261, 262, 263 (e.g., each winding 261, 262, 263) during each of a plurality of drive stages of each modulation cycle 320-1, 320-2, 320-n and a voltage is not applied to one or more of the windings 261, 262, 263 (e.g., any of the windings 261, 262, 263) during each of a plurality of non-drive stages of each modulation cycle 320-1, 320-2, 320-n. At least two of the drive stages are chronologically separate from the other drive stages (e.g., at least three of the drive stages are temporally non-contiguous) within each modulation cycle.

Further, during each of the plurality of drive stages of each modulation cycle 320-1, 320-2, 320-n, the magnitude of the current through the one or more of the windings 261, 262, 263 to which a voltage is applied varies (e.g., the rate of change of the magnitude of the current is non-zero) due the inductance of the one or more windings 261, 262, 263. On the other hand, during each of the plurality of non-drive stages of each modulation cycle 320-1, 320-2, 320-n, the magnitude of the current through the one or more of the windings 261, 262, 263 to which a voltage is not applied is substantially constant (and may be non-zero) due to the inductance of the one or more windings 261, 262, 263.

The duty ratio is conceptually defined as a ratio between a total proportion of the modulation cycle 320-1, 320-2, 320-n spent in the drive stages and a total proportion of the modulation cycle 320-1, 320-2, 320-n spent in the non-drive stages. The duty ratio is a dimensionless value between zero and unity (and in particular, may be greater than zero and less than unity).

In addition, controlling of the state of the half bridges HB1, HB2, HB3 during each modulation cycle 320-2, 320-2, 320-n is such that a magnitude of a current through the at least one winding 261, 262, 263 is substantially zero at both a start and an end of each modulation cycle 320-1, 320-2, 320-n. This ensures that the electrical power provided to the wound arrangement by the power converter 230 does not become excessively large during performance of the method 300. Moreover, controlling of the state of the half bridges HB1, HB2, HB3 during each modulation cycle 320-2, 320-2, 320-n is such that a substantially non-rotating magnetic field (e.g., a pulsating magnetic field) is induced within the windings 261, 262, 263. This ensures that a continuous rotational force is not imparted to the rotor 268 during performance of the method 300.

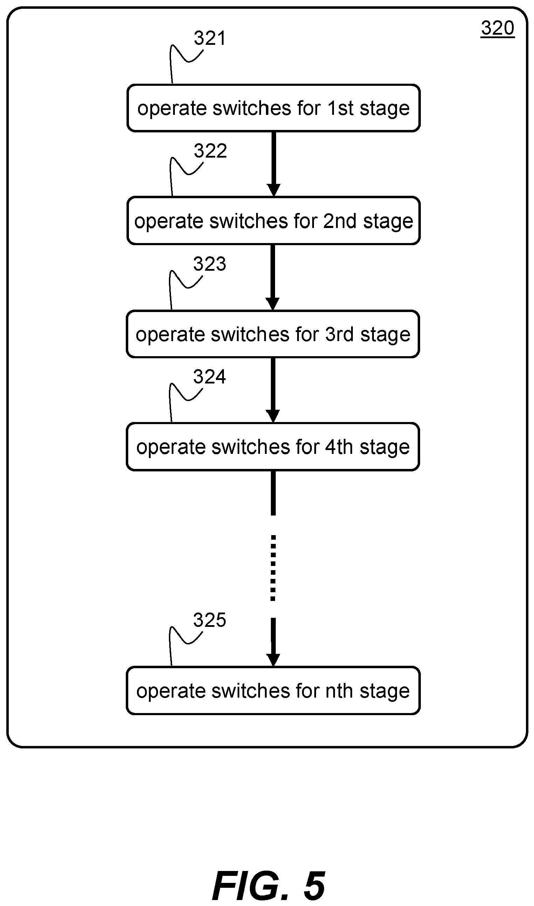

**FIG. 5** is a detail flowchart showing an example action of performing, at a block 320, a modulation cycle according to a duty ratio as part of the method 300 described above with reference to FIG. 4.

FIG. 5 shows the example action of performing the modulation cycle as comprising: an action of operating, at sub-block 321, the switches 651-656 for a first stage, an action of operating, at sub-block 322, the switches 651-656 for a second stage, an action of operating, at sub-block 323, the switches 651-656 for a third stage, an action of operating, at sub-block 324, the switches 651-656 for a fourth stage, and an action of operating, at sub-block 325, the switches 651-656 for an nth stage. The total number of stages which form the modulation cycle may vary, and may be in accordance with the example implementations of the modulation cycle(s) described in further detail below with reference to TABs. 1 to 3. Each stage represented by sub-blocks 321-325 is either a drive stage (e.g., a full-drive stage or a partial-drive stage as discussed below) or a non-drive stage as also discussed in further detail below. However, each non-drive stage is followed by or preceded by a drive-stage in each modulation cycle 320-1, 320-2, 320-n.

**TABs. 1** to **3** each show the state of the half-bridges HB1, HB2, HB3 as part of the performance of each modulation cycles 320-1, 320-2, 320-n described above per respective example implementations of a single modulation cycle 320-1, 320-2, 320-n. As shown by TABs. 1 to 3, each modulation cycle is decomposed into a multiplicity of stages (that is, drive and non-drive stages). Further, in TABs. 1 to 3, the duty ratio discussed above is denoted by *D_{C},* a basic frequency is denoted by *f* (i.e., a base characteristic frequency of the modulation cycle such that a period *T* of the modulation cycle is equal to the reciprocal of *f*), the input DC voltage received from the DC power supply 220 via the DC bus 210 through input terminals 232, 234 is denoted by *V_{DC}* and a duration of each stage is denoted by *t^{#},* where index # identifies each stage, and where each stage is assigned a respective Latin character as its index. TABs. 1 to 3 may be described as defining respective pulse patterns for the voltage/currents to be provided to the windings 261, 262, 263 of the motor 260.

**TAB. 1: states of each half-bridge as controlled during a multiplicity of stages of a first example implementation of a modulation cycle performable as part of the method 300.**

| **Stage ind. (#)** | **HB1** | **HB2** | **HB3** | ***V*₁₂** | ***V*₂₃** | ***V*₃₁** | ***t^{#}*** |
|---|---|---|---|---|---|---|---|
| **A** | LOW | LOW | OFF | 0 | 0 | 0 | $\frac{1 - {D}_{C}}{6 f}$ |
| **B** | LOW | HIGH | OFF | *V_{DC}* | $\frac{- {V}_{DC}}{2}$ | $\frac{- {V}_{DC}}{2}$ | $\frac{{D}_{C}}{4 f}$ |
| **C** | HIGH | HIGH | OFF | 0 | 0 | 0 | $\frac{1 - {D}_{C}}{6 f}$ |
| **D** | LOW | HIGH | OFF | *V_{DC}* | $\frac{- {V}_{DC}}{2}$ | $\frac{- {V}_{DC}}{2}$ | $\frac{{D}_{C}}{4 f}$ |
| **E** | LOW | LOW | OFF | 0 | 0 | 0 | $\frac{1 - {D}_{C}}{6 f}$ |
| **A'** | LOW | LOW | OFF | 0 | 0 | 0 | $\frac{1 - {D}_{C}}{6 f}$ |
| **B'** | HIGH | LOW | OFF | *- V_{DC}* | $\frac{{V}_{DC}}{2}$ | $\frac{{V}_{DC}}{2}$ | $\frac{{D}_{C}}{4 f}$ |
| **C'** | HIGH | HIGH | OFF | 0 | 0 | 0 | $\frac{1 - {D}_{C}}{6 f}$ |
| **D'** | HIGH | LOW | OFF | *- V_{DC}* | $\frac{{V}_{DC}}{2}$ | $\frac{{V}_{DC}}{2}$ | $\frac{{D}_{C}}{4 f}$ |
| **E'** | LOW | LOW | OFF | 0 | 0 | 0 | $\frac{1 - {D}_{C}}{6 f}$ |

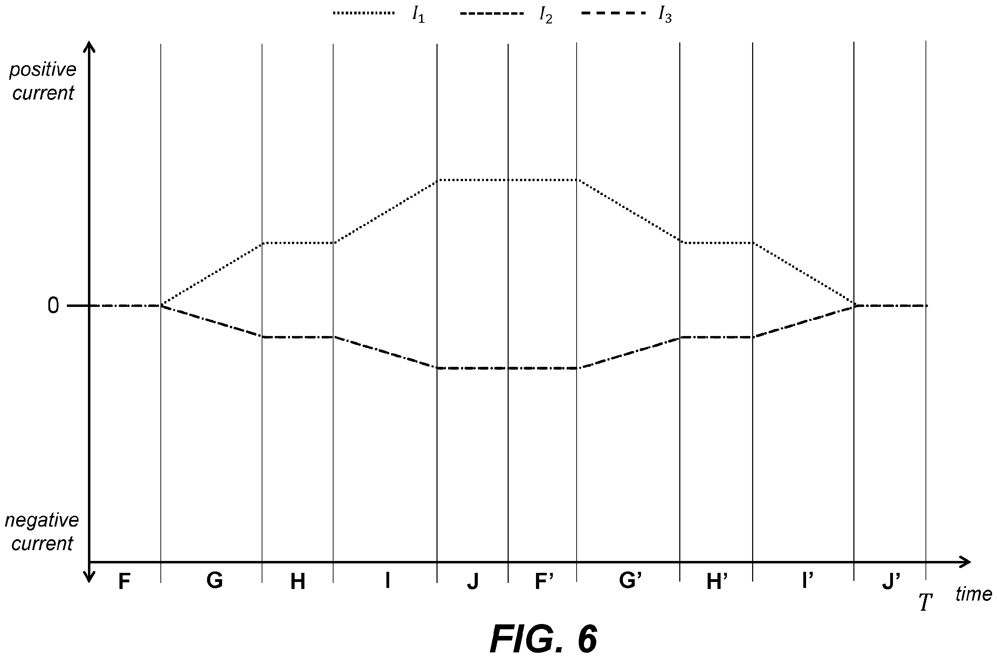

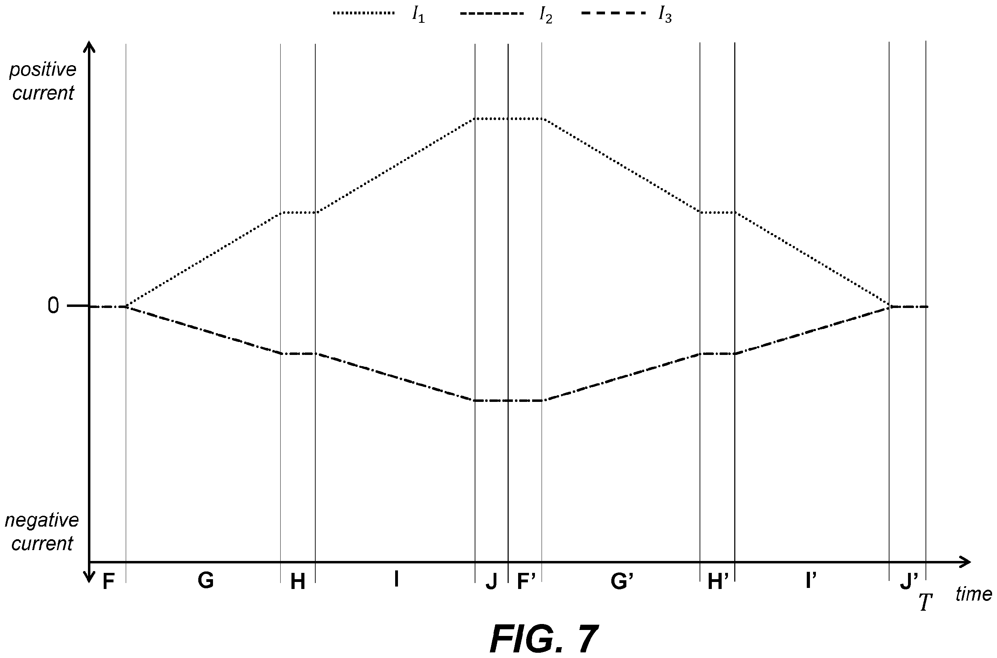

**FIGs. 6** and **7** are graphs which show highly idealised plots of the current through each winding 261, 262, 263 with respect to time during performance of a single first example implementation of a modulation cycle as defined by TAB. 1 above. In FIG. 6, the duty ratio *D_{C}* is equal to 0.5 whereas in FIG. 7, the duty ratio *D_{C}* is equal to 0.75. The first example implementation of the modulation cycle is decomposed into ten successive stages indexed as A-E and A'-E'. Of these ten stages, the first A, third C, fifth E, sixth A', eighth C' and tenth E' are non-drive stages while the second B, fourth D, seventh B' and fourth D' are drive stages. More specifically, the second B, fourth D, seventh B' and fourth D' are full-drive stages in which a voltage is applied to each winding 261, 262, 263. However, the voltage *V*₂₃ applied to the second winding 262 and the voltage *V*₃₁ applied to the third winding 263 is the same throughout the first example implementation of the modulation cycle. In other words, the pulse pattern defined by TAB. 2 includes six non-drive stages and four drive stages. Moreover, a sign of the voltage applied to the winding(s) during the second B and fourth D drive stages opposes a sign of the voltage applied to the winding(s) during the seventh B' and fourth D' drive stages.

**TAB. 2: states of each half-bridge as controlled during a multiplicity of stages of a second example implementation of a modulation cycle performable as part of the method 300.**

| **Stage ind. (#)** | **HB1** | **HB2** | **HB3** | ***V*₁₂** | ***V*₂₃** | ***V*₃₁** | ***t^{#}*** |
|---|---|---|---|---|---|---|---|
| **F** | LOW | LOW | LOW | 0 | 0 | 0 | $\frac{1 - {D}_{C}}{6 f}$ |
| **G** | LOW | HIGH | HIGH | *V_{DC}* | 0 | *- V_{DC}* | $\frac{{D}_{C}}{4 f}$ |
| **H** | HIGH | HIGH | HIGH | 0 | 0 | 0 | $\frac{1 - {D}_{C}}{6 f}$ |
| **I** | LOW | HIGH | HIGH | *V_{DC}* | 0 | *- V_{DC}* | $\frac{{D}_{C}}{4 f}$ |
| **J** | LOW | LOW | LOW | 0 | 0 | 0 | $\frac{1 - {D}_{C}}{6 f}$ |
| **F'** | LOW | LOW | LOW | 0 | 0 | 0 | $\frac{1 - {D}_{C}}{6 f}$ |
| **G'** | HIGH | LOW | LOW | *- V_{DC}* | 0 | *V_{DC}* | $\frac{{D}_{C}}{4 f}$ |
| **H'** | HIGH | HIGH | HIGH | 0 | 0 | 0 | $\frac{1 - {D}_{C}}{6 f}$ |
| **I'** | HIGH | LOW | LOW | *- V_{DC}* | 0 | *V_{DC}* | $\frac{{D}_{C}}{4 f}$ |
| **J'** | LOW | LOW | LOW | 0 | 0 | 0 | $\frac{1 - {D}_{C}}{6 f}$ |

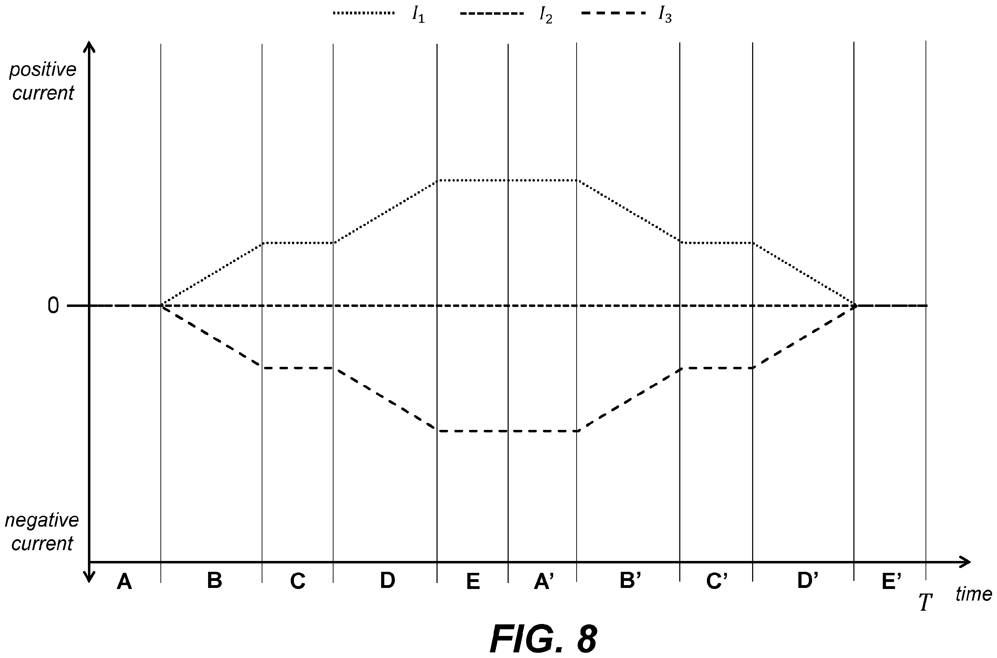

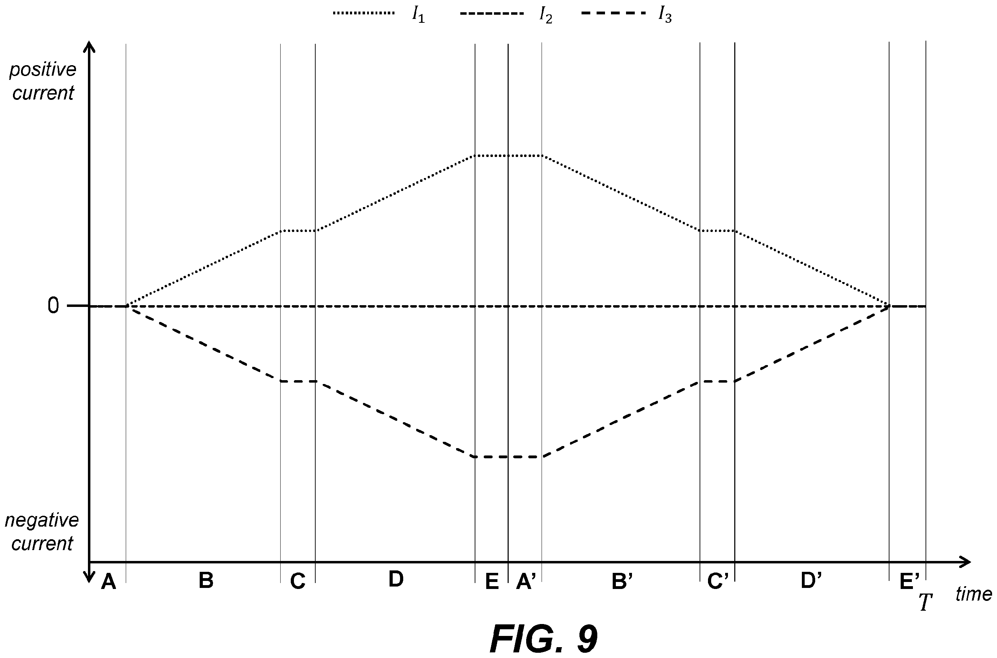

**FIGs. 8** and **9** are graphs which show highly idealised plots of the current through each winding 261, 262, 263 with respect to time during performance of a single second example implementation of a modulation cycle as defined by TAB. 2 above. In FIG. 8, the duty ratio *D_{C}* is equal to 0.5 whereas in FIG. 9, the duty ratio *D_{C}* is equal to 0.75. Like the first example implementation, the second example implementation of the modulation cycle is decomposed into ten successive stages. However, in the second example implementation, these stages are indexed as F-J and F'-J'. Of these ten stages, the first F, third H, fifth J, sixth F', eighth H' and tenth J' are non-drive stages while the second G, fourth I, seventh G' and fourth I' are drive stages. More specifically, the second G, fourth I, seventh G' and fourth I' are partial-drive stages in which a voltage is applied to only a subset (e.g., a first subset) of the windings 261, 262, 263. Namely, a voltage *V*₂₃ is substantially not applied to the second winding 262 (e.g., a second subset of the windings 261, 262, 263) by the power converter 230 throughout the second example implementation of the modulation cycle. It follows that substantially no current flows through the second winding 262 throughout the second example implementation of the modulation cycle. Hence, like the pulse pattern defined by TAB. 1, the pulse pattern defined by TAB. 2 includes six non-drive stages and four drive stages. Additionally, a sign of the voltage applied to the winding(s) during the second G and fourth I drive stages opposes a sign of the voltage applied to the winding(s) during the seventh G' and fourth I' drive stages.

**TAB. 3: states of each half-bridge as controlled during a multiplicity of stages of a third example implementation of a modulation cycle performable as part of the method 300.**

| **Stage** | **HB1** | **HB2** | **HB3** | ***V*₁₂** | ***V*₂₃** | ***V*₃₁** | ***t^{#}*** |
|---|---|---|---|---|---|---|---|
| **ind. (#)** | | | | | | | |
| **K** | LOW | LOW | LOW | 0 | 0 | 0 | $\frac{1 - {D}_{C}}{6 f}$ |
| **L** | LOW | LOW | HIGH | 0 | *V_{DC}* | *- V_{DC}* | $\frac{{D}_{C}}{8 f}$ |
| **M** | LOW | HIGH | HIGH | *V_{DC}* | 0 | *- V_{DC}* | $\frac{{D}_{C}}{8 f}$ |
| **N** | HIGH | HIGH | HIGH | 0 | 0 | 0 | $\frac{1 - {D}_{C}}{6 f}$ |
| **P** | LOW | HIGH | HIGH | *V_{DC}* | 0 | *- V_{DC}* | $\frac{{D}_{C}}{8 f}$ |
| **Q** | LOW | LOW | HIGH | 0 | *V_{DC}* | *- V_{DC}* | $\frac{{D}_{C}}{8 f}$ |
| **R** | LOW | LOW | LOW | 0 | 0 | 0 | $\frac{1 - {D}_{C}}{6 f}$ |
| **K'** | LOW | LOW | LOW | 0 | 0 | 0 | $\frac{1 - {D}_{C}}{6 f}$ |
| **L'** | HIGH | LOW | LOW | 0 | *- V_{DC}* | *V_{DC}* | $\frac{{D}_{C}}{8 f}$ |
| **M'** | HIGH | HIGH | LOW | *- V_{DC}* | 0 | *V_{DC}* | $\frac{{D}_{C}}{8 f}$ |
| **N'** | HIGH | HIGH | HIGH | 0 | 0 | 0 | $\frac{1 - {D}_{C}}{6 f}$ |
| **P'** | HIGH | HIGH | LOW | *- V_{DC}* | 0 | *V_{DC}* | $\frac{{D}_{C}}{8 f}$ |
| **Q'** | HIGH | LOW | LOW | 0 | *- V_{DC}* | *V_{DC}* | $\frac{{D}_{C}}{8 f}$ |
| **R'** | LOW | LOW | LOW | 0 | 0 | 0 | $\frac{1 - {D}_{C}}{6 f}$ |

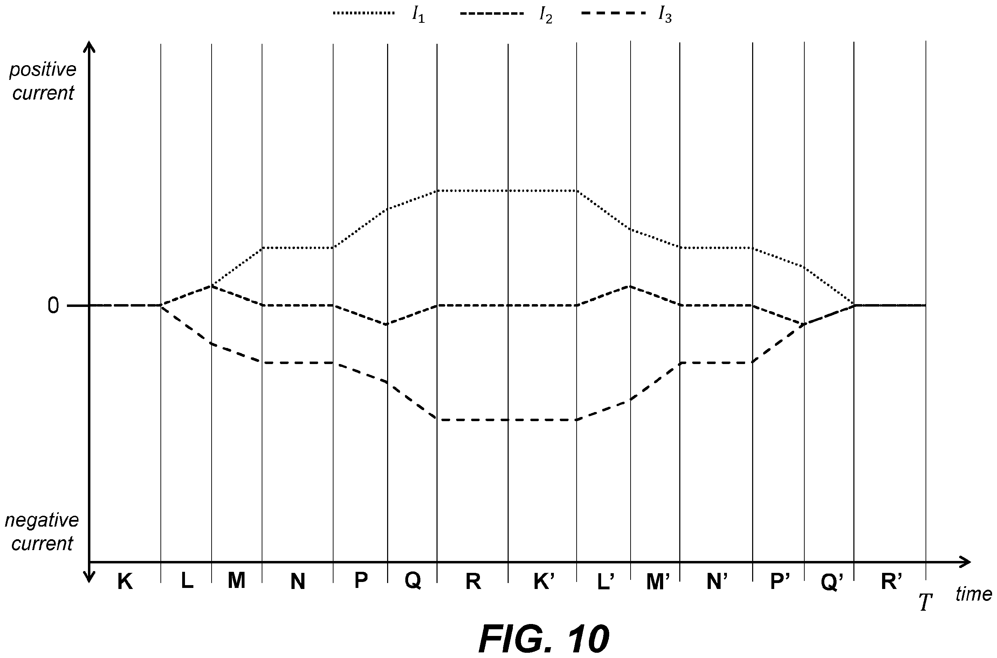

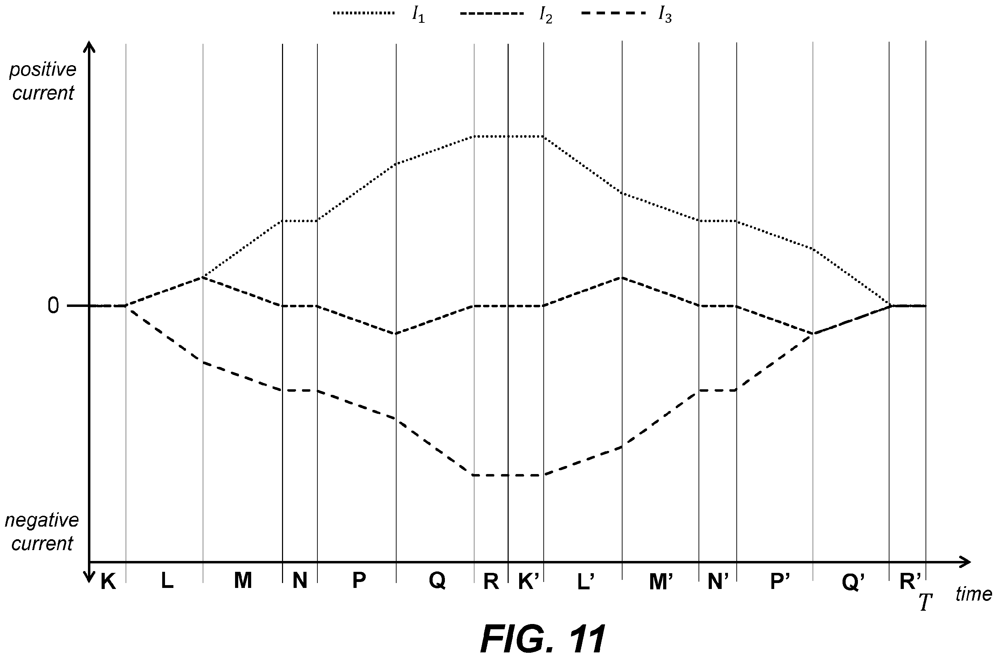

**FIGs. 10** and **11** are graphs which show highly idealised plots of the current through each winding 261, 262, 263 with respect to time during performance of a single third example implementation of a modulation cycle as defined by TAB. 3 above. In FIG. 10, the duty ratio *D_{C}* is equal to 0.5 whereas in FIG. 11, the duty ratio *D_{C}* is equal to 0.75.

The third example implementation of the modulation cycle is decomposed into fourteen successive stages indexed as K-R and K'-R'. Of these fourteen stages, the first K, fourth N, seventh R, eighth K', eleventh N' and fourteenth R' are non-drive stages while the second L, third M, fifth P', sixth Q', ninth L', tenth M', twelfth P' and thirteenth Q' are drive stages. More specifically, second L, third M, fifth P', sixth Q', ninth L', tenth M', twelfth P' and thirteenth Q' are partial-drive stages in which a voltage is applied to only a subset (e.g., a first subset) of the windings 261, 262, 263 and in which a voltage is substantially not applied to a different subset (e.g., a second subset) of the windings 261, 262, 263. In other words, the pulse pattern defined by TAB. 3 includes six non-drive stages and eight drive stages. A sign of the voltage applied to the winding(s) during the second L, third M, fifth P' and sixth Q' drive stages opposes a sign of the voltage applied to the winding(s) during the ninth L', tenth M', twelfth P' and thirteenth Q' drive stages.

As can be seen from TABs. 1 to 3, when the duty ratio *D_{C}* is less than unity, then the duration of the non-drive stages of the modulation cycle will be greater than zero. In fact, whenever the duty ratio *D_{C}* is less than unity, the modulation cycle will include a total of separate six non-drive stages having non-zero durations (or, in equally correct terms, five separate non-drive stages if the middle stages (e.g., the fifth and sixth stages in TABs. 1 and 2 and the seventh and eighth stages in TAB. 3) are considered to form a unified middle stage).

By comparison of FIGs. 6 to 11, it may be seen that by relatively increasing the duty ratio *D_{C},* a fraction of the modulation cycle for which the current through the winding(s) 261, 262, 263 is increased and the peak current through the winding(s) 261, 262, 263 is also increased. As a consequence, a magnitude of an average time-derivative of the magnetic flux induced by the winding(s) 261, 262, 263 throughout the modulation cycle is increased. This results in the induction of relatively greater average electrical current(s) (e.g., eddy current(s)) within the rotor 268 of the motor 266 when the duty ratio *D_{C}* has been relatively increased per Faraday's law of induction and/or the exhibiting of relatively greater hysteresis losses within the rotor 268, as will be appreciated by those skilled in the art. The average electrical current(s) induced in the rotor 268 is directly related to an amount of heating provided to the stator 266 and/or the rotor 268. Therefore the duty ratio *D_{C}* may be used as a control variable for varying an amount of heating provided to the stator 266 and/or the rotor 268.

Returning now to FIG. 4, the method 300 may comprise varying the duty ratio between sequential (e.g., repeated) performances of the modulation cycle 320-1, 320-2, 320-n within the sequence of modulation cycles. In particular, if the duty ratio determined at each of the actions represented by blocks 310-1, 320-1 and 310-n in FIG. 4 does not remain constant, then the method comprises varying the duty ratio in such a manner.

The relevant duty ratio may be determined at each of the actions represented by blocks 310-1, 310-2 and 310-n in FIG. 4 by receiving the relevant duty ratio from an external data processing system (e.g., a server communicatively coupled to the controller 290) or by retrieving the relevant duty ratio from a storage medium (e.g., a memory provided to the controller 290).

Otherwise, the relevant duty ratio may be determined at each of the actions represented by blocks 310-1, 310-2 and 310-n in FIG. 4 based on a monitored parameter associated with the electrical system 200, 200'. The parameter may be monitored using an appropriately positioned dedicated sensor 280 provided to the electrical system 200, 200' as shown in FIG. 3. Accordingly, the method 300 may further comprise an action of monitoring a parameter associated with the associated with the heating provided to the stator 266 and/or rotor 268 while the method 300 is being carried out. The monitored parameter may include: an impedance of one or more of the windings 261, 262, 263; a temperature of one or more of the windings 261, 262, 263, a temperature of the rotor 268; and/or a temperature of a medium proximal to the rotor 268 (e.g., the refrigerant circulated through the compressor 402 by the vapour-compression refrigeration circuit 400). Accordingly, the sensor 280 may be an impedance sensor (which may include a resistance transducer, an inductance transducer and/or a capacitance transducer) or a temperature sensor.

Each action represented by blocks 310-1, 310-2 and 310-n in FIG. 4 may include comparing the monitored parameter with a setpoint value and determining the duty ratio based on the result of the comparison. By way of example, each action represented by blocks 310-1, 310-2 and 310-n in FIG. 4 may include determining an error between the monitored parameter and the setpoint value and determining the duty ratio in the range lying between zero and unity. Suitable techniques for doing so include the use of proportional logics, proportional-integral logics, proportional-differential logics, proportional-integral-differential logics, feedforward logics and the like as will now be apparent to those skilled in the art in view of the disclosure made herein. In this way, the duty ratio may be varied based on the monitored parameter between sequential performances of the modulation cycle.

The setpoint value may be selected as, for instance, a value above which the windings 261, 262, 263 are likely to suffer damage from a level of heating applied via the windings 261, 262, 263 and/or above which the stator 266 and/or the rotor 268 is likely to suffer damage due to the level of heating applied via the windings 261, 262, 263. In addition or instead, the setpoint value may be selected as a value which relates to (e.g., corresponds to the enablement of) a process to be instigated and/or facilitated by the method 300, such as evaporation of the refrigerant circulated through the compressor 402 by the vapour-compression refrigeration circuit 400. Evaporation of the refrigerant in this way may be particularly efficient if the compressor 204 is a hermetic/hermetically sealed compressor.

Previously-considered heating methodologies included supplying substantially constant currents to one or more windings of a motor. However, the inventors found that because of the relatively low resistance(s) of the winding(s), an Ohmic heating provided by the winding(s) was also relatively low despite the supply of relatively large magnitude substantially constant currents into the or each winding. For this reason, excessively long time periods were considered to provide what was deemed to be enough evaporation of refrigerant without requiring an inordinately large power supply and/or without overloading the other components of the wider system.

The methodologies described herein involve the use of a pulse pattern defined such that that specific eddy current losses and/or hysteresis losses occur within the metallic component (e.g., the stator 266 and/or the rotor 268) which cause heating of the metallic component (e.g., inductive heating). The inventors have found that a total amount of heating applied to the metallic component may be increased by a factor of 10 (i.e., an order of magnitude) using methodologies in accordance with the present disclosure compared to previously-considered substantially constant current methodologies without overloading the components of the power converter 230 (e.g.,. the switches 651-656). Because of the increased total amount of heating which is facilitated by the methodologies described herein, a time period taken to provide what is deemed to be enough evaporation of refrigerant may be relatively shortened. In the context of TRUs, this reduces a time for the TRU cannot be used while switching between respective modes thereof, thereby improving operability of the TRU.

Those skilled in the art will appreciate that pulse patterns other than those defined by TABs. 1 to 3 are possible (e.g., that the pulse patterns defined by TABs. 1 to 3 may be modified). However, the inclusion of these stages (e.g., such that the pulse pattern includes at least five non-drive stages) as defined by TABs. 1 to 3 provides simple and effective means for controlling the heat provided to the metallic component in a smooth manner during performance of the method 300 by only varying the duty ratio as discussed above while providing a broad range of control (e.g., from 0% when the duty ratio is equal to zero and nearly 100% when the duty ratio approaches unity).

In addition, those skilled in the art will appreciate that the methods described herein can be applied to power converters 230 comprising only two half-bridges and to motors 260 comprising only a single phase winding 261. In particular, the first example implementation of a modulation cycle as defined by TAB. 1 may be used in connection with a power converter comprising only two-half bridges HB1, HB3 and a motor comprising only a single phase winding coupled to these two half-bridges.

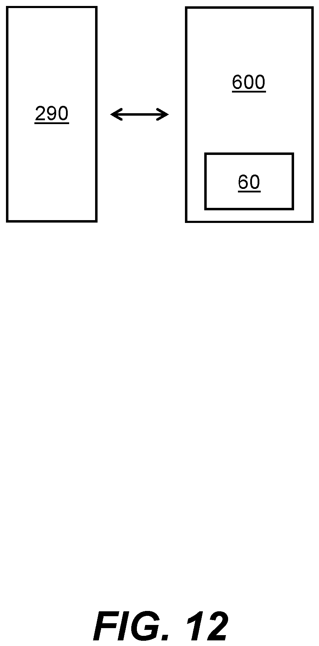

**FIG. 12** shows, highly schematically, a machine-readable medium 600 having stored thereon a computer program 60 comprising instructions which, when executed by the controller 290 provided to a power converter in accordance with the present disclosure (e.g., the power converter 230 described with reference to FIG. 3), cause the controller 290 to execute the method 300 described above with reference to FIG. 4.

Except where mutually exclusive, a feature described in relation to any one of the above aspects may be applied mutatis mutandis to any other aspect. Furthermore, except where mutually exclusive, any feature described herein may be applied to any aspect and/or combined with any other feature described herein. Moreover, while the present disclosure is made with in the context of electric motors, transport refrigeration systems and/or vapour-compression circuits, it will be appreciated that the present disclosure has other possible applications in other technical areas.

## Claims

1. A method (300) for heating a component (268) using a system (200, 200') comprising: a wound arrangement (260) including at least one winding (261, 262, 263) having an inductance, and at least two half-bridges (HB1, HB2, HB3), wherein each half-bridge is coupled to the wound arrangement, and wherein the wound arrangement is proximal to the component; the method **characterized by** comprising:
performing a sequence of modulation cycles (320-1, 320-2, 320-n) in which the half-bridges are controlled such that:
a voltage is applied to the winding during at least four drive stages (B, B', D, D', G, G', I, I', L, L', M, M', P, P', Q, Q') of each modulation cycle; and
a voltage is not applied to the winding during at least five non-drive stages (A, A', C, C', E, E', F, F', H, H', J, J', K, K', N, N', R, R') of each modulation cycle,
wherein each non-drive stage is followed by or preceded by one of the drive stages in each modulation cycle.

2. The method (300) of claim 1, wherein a magnitude of a current through the winding (261, 262, 263) is substantially zero at both a start and an end of each modulation cycle (320-1, 320-2, 320-n).

3. The method (300) of any preceding claim, wherein, within each modulation cycle (320-1, 320-2, 320-n), the voltage applied to the winding (261, 262, 263) during a chronologically first of the drive stages (B, G) has a sign which matches a sign of the voltage applied during a chronologically second of the drive stages (D, I).

4. The method (300) of any preceding claim, wherein each half-bridge (HB1, HB2, HB3) is operable in a high complementary state and a low complementary state, and wherein:
during each of the at least four drive stages (B, B', D, D', G, G', I, I', L, L', M, M', P, P', Q, Q') of each modulation cycle (320-1, 320-2, 320-n), at least one half-bridge is operated in the high complementary state and at least one half-bridge is operated in the low complementary state; and
during each of the at least five non-drive stages (A, A', C, C', E, E', F, F', H, H', J, J', K, K', N, N', R, R') of each modulation cycle, the half-bridges are all operated in the same complementary state.

5. The method (300) of any preceding claim, wherein a sign of the voltage applied to the winding (261, 262, 263) during two of the drive stages (B, B', D, D', G, G', I, I', L, L', M, M', P, P', Q, Q') opposes a sign of the voltage applied to the winding during at least two of the other drive stages.

6. The method (300) of any preceding claim, further comprising varying a ratio between a duration of at least one of the drive stages (B, B', D, D', G, G', I, I', L, L', M, M', P, P', Q, Q') of the modulation cycle (320-1, 320-2, 320-n) and a length of at least one of the non-drive stages (A, A', C, C', E, E', F, F', H, H', J, J', K, K', N, N', R, R') of the modulation cycle between modulation cycles.

7. The method (300) of claim 6, further comprising:
monitoring (380) a parameter, the parameter including an impedance of the winding (261, 262, 263) or a temperature of: the winding, the component (268) or a medium proximal to the component; and
varying the ratio based on the monitored parameter.

8. The method (300) of claim 7, wherein:
the wound arrangement (260) includes at least three windings (261, 262, 263) each having an inductance;
the system comprises a third half-bridge (HB1, HB2, HB3) coupled to the wound arrangement; and
performing the sequence of modulation cycles (320-1, 320-2, 320-n) includes controlling the half-bridges such that:
a voltage is applied to at least two of the windings during the at least four drive stages (B, B', D, D', G, G', I, I', L, L', M, M', P, P', Q, Q') of each modulation cycle; and
a voltage is not applied to any of the windings during the at least five non-drive stages (A, A', C, C', E, E', F, F', H, H', J, J', K, K', N, N', R, R') of each modulation cycle.

9. The method (300) of claim 8, wherein performing the sequence of modulation cycles (320-1, 320-2, 320-n) includes controlling the half-bridges (HB1, HB2, HB3) such that:
a voltage is applied to a first subset of the windings (261, 262, 263) during a plurality of partial-drive stages (G, G', I, I', L, L', M, M', P, P', Q, Q') of each modulation cycle; and
a voltage is not applied to any of a second subset of the windings during the plurality of partial-drive stages of each modulation cycle.

10. A system (200) comprising: a wound arrangement (260) including at least one winding (261, 262, 263) having an inductance, at least two half-bridges (HB1, HB2, HB3) and a controller (290), wherein
each half-bridge is coupled to the wound arrangement; and
the controller is configured to carry out the method (300) of any preceding claim.

11. The system (200) of claim 10, wherein the wound arrangement (260) forms part of a stator (266) of an electric motor, and wherein the component forms at least part of a rotor (268) of the electric motor.

12. A computer program (60) comprising instructions to cause the system (200) of claim 10 or claim 11 to carry out the method (300) according to any of claims 1 to 9.

13. A computer-readable medium (600) having stored thereon the computer program (60) of claim 12.

14. A transport refrigeration unit (20) comprising the system (200) of claim 10 or claim 11.

15. The transport refrigeration unit (20) of claim 14, further comprising a vapour-compression refrigeration circuit (400) including a compressor (402), wherein the controller (290) of the system (200) is configured to carry out the method (300) in accordance with claim 6, and wherein:
varying the ratio based on the monitored parameter includes comparing the monitored parameter with a setpoint value and determining the ratio based on a result of the comparison; and
the setpoint value relates to a process of evaporation of refrigerant circulated through the compressor by the vapour-compression refrigeration circuit.

## Patentansprüche

1. Verfahren (300) zum Erwärmen einer Komponente (268) unter Verwendung eines Systems (200, 200'), das Folgendes umfasst:
eine Wicklungsanordnung (260), die mindestens eine Wicklung (261, 262, 263), die eine Induktivität aufweist, und mindestens zwei Halbbrücken (HB1, HB2, HB3) einschließt, wobei jede Halbbrücke mit der Wicklungsanordnung gekoppelt ist und wobei sich die Wicklungsanordnung in der Nähe der Komponente befindet;
wobei das Verfahren **dadurch gekennzeichnet ist, dass** es Folgendes umfasst:
Durchführen einer Folge von Modulationszyklen (320-1, 320-2, 320-n), in denen die Halbbrücken so gesteuert werden, dass:
während mindestens vier Antriebsstufen (B, B', D, D', G, G', I, I', L, L', M, M', P, P', Q, Q') jedes Modulationszyklus an die Wicklung eine Spannung angelegt wird; und
während mindestens fünf Nicht-Antriebsstufen (A, A', C, C', E, E', F, F', H, H', J, J', K, K', N, N', R, R') jedes Modulationszyklus keine Spannung an die Wicklung angelegt wird, wobei auf jede Nicht-Antriebsstufe in jedem Modulationszyklus eine der Antriebsstufen folgt oder ihr vorausgeht.

2. Verfahren (300) nach Anspruch 1, wobei eine Stärke eines Stroms durch die Wicklung (261, 262, 263) sowohl an einem Beginn als auch an einem Ende jedes Modulationszyklus (320-1, 320-2, 320-n) im Wesentlichen null ist.

3. Verfahren (300) nach einem der vorstehenden Ansprüche, wobei innerhalb jedes Modulationszyklus (320-1, 320-2, 320-n) die an die Wicklung (261, 262, 263) während einer chronologisch ersten der Antriebsstufen (B, G) angelegte Spannung ein Vorzeichen aufweist, das mit einem Vorzeichen der während einer chronologisch zweiten der Antriebsstufen (D, I) angelegten Spannung übereinstimmt.

4. Verfahren (300) nach einem der vorstehenden Ansprüche, wobei jede Halbbrücke (HB1, HB2, HB3) in einem hohen komplementären Zustand und einem niedrigen komplementären Zustand betrieben werden kann, und wobei:
während jeder der mindestens vier Antriebsstufen (B, B', D, D', G, G', I, I', L, L', M, M', P, P', Q, Q') jedes Modulationszyklus (320-1, 320-2, 320-n) mindestens eine Halbbrücke in dem hohen komplementären Zustand und mindestens eine Halbbrücke in dem niedrigen komplementären Zustand betrieben wird; und
während jeder der mindestens fünf Nicht-Antriebsstufen (A, A', C, C', E, E', F, F', H, H', J, J', K, K', N, N', R, R') jedes Modulationszyklus die Halbbrücken alle in dem gleichen komplementären Zustand betrieben werden.

5. Verfahren (300) nach einem der vorstehenden Ansprüche, wobei ein Vorzeichen der an die Wicklung (261, 262, 263) während zweier der Antriebsstufen (B, B', D, D', G, G', I, I', L, L', M, M', P, P', Q, Q') angelegten Spannung einem Vorzeichen der an die Wicklung während mindestens zweier der anderen Antriebsstufen angelegten Spannung entgegengesetzt ist.

6. Verfahren (300) nach einem der vorstehenden Ansprüche, das ferner ein Variieren eines Verhältnisses zwischen einer Dauer von mindestens einer der Antriebsstufen (B, B', D, D', G, G', I, I', L, L', M, M', P, P', Q, Q') des Modulationszyklus (320-1, 320-2, 320-n) und einer Länge von mindestens einer der Nicht-Antriebsstufen (A, A', C, C', E, E', F, F', H, H', J, J', K, K', N, N', R, R') des Modulationszyklus zwischen den Modulationszyklen umfasst.

7. Verfahren (300) nach Anspruch 6, ferner umfassend:
Überwachen (380) eines Parameters, wobei der Parameter eine Impedanz der Wicklung (261, 262, 263) oder eine Temperatur der Wicklung, der Komponente (268) oder eines Mediums in der Nähe der Komponente einschließt; und
Variieren des Verhältnisses auf der Grundlage des überwachten Parameters.

8. Verfahren (300) nach Anspruch 7, wobei:
die Wicklungsanordnung (260) mindestens drei Wicklungen (261, 262, 263) einschließt, die jeweils eine Induktivität aufweisen;
das System eine dritte Halbbrücke (HB1, HB2, HB3) umfasst, die mit der Wicklungsanordnung gekoppelt ist; und
das Durchführen der Folge von Modulationszyklen (320-1, 320-2, 320-n) das Steuern der Halbbrücken derart einschließt, dass:
während der mindestens vier Antriebsstufen (B, B', D, D', G, G', I, I', L, L', M, M', P, P', Q, Q') jedes Modulationszyklus an mindestens zwei der Wicklungen eine Spannung angelegt wird; und
während der mindestens fünf Nicht-Antriebsstufen (A, A', C, C', E, E', F, F', H, H', J, J', K, K', N, N', R, R') jedes Modulationszyklus an keine der Wicklungen eine Spannung angelegt wird.

9. Verfahren (300) nach Anspruch 8, wobei das Durchführen der Folge von Modulationszyklen (320-1, 320-2, 320-n) das Steuern der Halbbrücken (HB1, HB2, HB3) einschließt, derart, dass:
eine Spannung an eine erste Teilmenge der Wicklungen (261, 262, 263) während einer Vielzahl von Teilantriebsstufen (G, G', I, I', L, L', M, M', P, P', Q, Q') jedes Modulationszyklus angelegt wird; und
während der Vielzahl von Teilantriebsstufen jedes Modulationszyklus an keine von einer zweiten Teilmenge der Wicklungen eine Spannung angelegt wird.

10. System (200), umfassend: eine Wicklungsanordnung (260), die mindestens eine Wicklung (261, 262, 263), die eine Induktivität aufweist, mindestens zwei Halbbrücken (HB1, HB2, HB3) und eine Steuerung (290) einschließt, wobei
jede Halbbrücke mit der Wicklungsanordnung gekoppelt ist; und die Steuerung so konfiguriert ist, dass sie das Verfahren (300) eines beliebigen der vorstehenden Ansprüche ausführt.

11. System (200) nach Anspruch 10, wobei die Wicklungsanordnung (260) einen Teil eines Stators (266) eines Elektromotors bildet und wobei die Komponente mindestens einen Teil eines Rotors (268) des Elektromotors bildet.

12. Computerprogramm (60), das Befehle umfasst, um das System (200) nach Anspruch 10 oder Anspruch 11 dazu zu veranlassen, das Verfahren (300) nach einem der Ansprüche 1 bis 9 auszuführen.

13. Computerlesbares Medium (600), auf dem das Computerprogramm (60) nach Anspruch 12 gespeichert ist.

14. Transportkühlanlage (20), die das System (200) nach Anspruch 10 oder Anspruch 11 umfasst.

15. Transportkühlanlage (20) nach Anspruch 14, die ferner einen Dampfkompressions-Kühlkreislauf (400) umfasst, der einen Kompressor (402) einschließt, wobei die Steuerung (290) des Systems (200) so konfiguriert ist, dass sie das Verfahren (300) nach Anspruch 6 ausführt, und wobei:
das Variieren des Verhältnisses auf der Grundlage des überwachten Parameters ein Vergleichen des überwachten Parameters mit einem Sollwert und ein Bestimmen des Verhältnisses auf der Grundlage eines Ergebnisses des Vergleichs einschließt; und
sich der Sollwert auf einen Verdampfungsprozess eines Kältemittels bezieht, das durch den Dampfkompressions-Kühlkreislauf durch den Kompressor zirkuliert wird.

## Revendications

1. Procédé (300) de chauffage d'un composant (268) à l'aide d'un système (200, 200') comprenant : un agencement d'enroulement (260) comportant au moins un enroulement (261, 262, 263) ayant une inductance, et au moins deux demi-ponts (HB1, HB2, HB3), dans lequel chaque demi-pont est couplé à l'agencement d'enroulement, et l'agencement d'enroulement est situé à proximité du composant ; le procédé étant **caractérisé en ce qu'**il comprend :
la réalisation d'une séquence de cycles de modulation (320-1, 320-2, 320-n) dans lesquels les demi-ponts sont commandés de sorte que :
une tension est appliquée à l'enroulement pendant au moins quatre étapes de commande (B, B', D, D', G, G', I, I', L, L', M, M', P, P', Q, Q') de chaque cycle de modulation ; et
aucune tension n'est appliquée à l'enroulement pendant au moins cinq étapes sans commande (A, A', C, C', E, E', F, F', H, H', J, J', K, K', N, N', R, R') de chaque cycle de modulation,
dans lequel chaque étape sans commande est suivie ou précédée par l'une des étapes de commande dans chaque cycle de modulation.

2. Procédé (300) selon la revendication 1, dans lequel une amplitude d'un courant traversant l'enroulement (261, 262, 263) est sensiblement nulle au début et à la fin de chaque cycle de modulation (320-1, 320-2, 320-n).

3. Procédé (300) selon une quelconque revendication précédente, dans lequel, à l'intérieur de chaque cycle de modulation (320-1, 320-2, 320-n), la tension appliquée à l'enroulement (261, 262, 263) pendant une première des étapes de commande (B, G) dans l'ordre chronologique a un signe qui correspond à un signe de la tension appliquée pendant une seconde des étapes de commande (D, I) dans l'ordre chronologique.

4. Procédé (300) selon une quelconque revendication précédente, dans lequel chaque demi-pont (HB1, HB2, HB3) est fonctionnel dans un état complémentaire élevé et dans un état complémentaire faible, et dans lequel :
pendant chacune des au moins quatre étapes de commande (B, B', D, D', G, G', I, I', L, L', M, M', P, P', Q, Q') de chaque cycle de modulation (320-1, 320-2, 320-n), au moins un demi-pont fonctionne dans l'état complémentaire élevé et au moins un demi-pont fonctionne dans l'état complémentaire faible ; et
pendant chacune des au moins cinq étapes sans commande (A, A', C, C', E, E', F, F', H, H', J, J', K, K', N, N', R, R') de chaque cycle de modulation, les demi-ponts fonctionnent tous dans le même état complémentaire.

5. Procédé (300) selon une quelconque revendication précédente, dans lequel un signe de la tension appliquée à l'enroulement (261, 262, 263) pendant deux des étapes de commande (B, B', D, D', G, G', I, I', L, L', M, M', P, P', Q, Q') s'oppose à un signe de la tension appliquée à l'enroulement pendant au moins deux des autres étapes de commande.

6. Procédé (300) selon une quelconque revendication précédente, comprenant en outre la variation d'un rapport entre une durée d'au moins une des étapes de commande (B, B', D, D', G, G', I, I', L, L', M, M', P, P', Q, Q') du cycle de modulation (320-1, 320-2, 320-n) et une longueur d'au moins une des étapes sans commande (A, A', C, C', E, E', F, F', H, H', J, J', K, K', N, N', R, R') du cycle de modulation entre des cycles de modulation.

7. Procédé (300) selon la revendication 6, comprenant en outre :
la surveillance (380) d'un paramètre, le paramètre comportant une impédance de l'enroulement (261, 262, 263) ou une température de l'enroulement, du composant (268) ou d'un milieu proche du composant ; et
la variation du rapport sur la base du paramètre surveillé.

8. Procédé (300) selon la revendication 7, dans lequel :
l'agencement d'enroulement (260) comporte au moins trois enroulements (261, 262, 263) ayant chacun une inductance ;
le système comprend un troisième demi-pont (HB1, HB2, HB3) couplé à l'agencement d'enroulement ; et
la réalisation de la séquence de cycles de modulation (320-1, 320-2, 320-n) comporte la commande des demi-ponts de sorte que :
une tension est appliquée à au moins deux des enroulements pendant les au moins quatre étapes de commande (B, B', D, D', G, G', I, I', L, L', M, M', P, P', Q, Q') de chaque cycle de modulation ; et
aucune tension n'est appliquée à aucun des enroulements pendant les au moins cinq étapes sans commande (A, A', C, C', E, E', F, F', H, H', J, J', K, K', N, N', R, R') de chaque cycle de modulation.

9. Procédé (300) selon la revendication 8, dans lequel la réalisation de la séquence de cycles de modulation (320-1, 320-2, 320-n) comporte la commande des demi-ponts (HB1, HB2, HB3) de sorte que :
une tension est appliquée à un premier sous-ensemble des enroulements (261, 262, 263) pendant une pluralité d'étapes de commande partielle (G, G', I, I', L, L', M, M', P, P', Q, Q') de chaque cycle de modulation ; et
aucune tension n'est appliquée à aucun d'un second sous-ensemble des enroulements pendant la pluralité d'étapes de commande partielle de chaque cycle de modulation.

10. Système (200) comprenant : un agencement d'enroulement (260) comportant au moins un enroulement (261, 262, 263) ayant une inductance, au moins deux demi-ponts (HB1, HB2, HB3) et un dispositif de commande (290), dans lequel
chaque demi-pont est couplé à l'agencement d'enroulement ; et
le dispositif de commande est configuré pour mettre en œuvre le procédé (300) selon une quelconque revendication précédente.

11. Système (200) selon la revendication 10, dans lequel l'agencement d'enroulement (260) fait partie d'un stator (266) d'un moteur électrique, et dans lequel le composant fait au moins partie d'un rotor (268) du moteur électrique.

12. Programme informatique (60) comprenant des instructions pour amener le système (200) selon la revendication 10 ou la revendication 11 à mettre en œuvre le procédé (300) selon l'une quelconque des revendications 1 à 9.

13. Support lisible par ordinateur (600) sur lequel est stocké le programme informatique (60) selon la revendication 12.

14. Unité de réfrigération de transport (20) comprenant le système (200) selon la revendication 10 ou selon la revendication 11.

15. Unité de réfrigération de transport (20) selon la revendication 14, comprenant en outre un circuit de réfrigération à compression de vapeur (400) comportant un compresseur (402), dans lequel le dispositif de commande (290) du système (200) est configuré pour mettre en œuvre le procédé (300) selon la revendication 6, et dans lequel :
la variation du rapport sur la base du paramètre surveillé comporte la comparaison du paramètre surveillé avec une valeur de consigne et la détermination du rapport sur la base d'un résultat de la comparaison ; et
la valeur de consigne est liée à un processus d'évaporation du fluide frigorigène circulant à travers le compresseur par le circuit de réfrigération à compression de vapeur.
